# EUROPEAN PATENT APPLICATION

(11) **EP 1 473 649 A1**
(43) Date of publication of application: **03.11.2004**
(21) Application number: 03076239.7
(22) Date of filing: 28.04.2003
(51) Int. Cl.: G06F 17/60

(54) **A system and method for task management**

(71) Applicant: Nederlandse Organisatie voor Toegepast-Natuurwetenschappelijk Onderzoek TNO, 2628 VK Delft (NL)
(72) Inventor: Visser, Michael Maria, 2803 LT Gouda (NL)
(74) Representative: Prins, Adrianus Willem, Mr. Ir.

(57) **Abstract**

A task management system, comprising a computer environment, a plurality of tasks (1), whereby the tasks are objects embedded in the computer environment, a task manager (2), comprising a process which is executable in the computer environment, whereby the task manager (2) is arranged for creating a first task by a first actor, whereby an actor is a user of the task management system, whereby the task manager (2) is further arranged for selecting the first task by a second actor, wherein the task manager (2) is further arranged for creating at least one second task by the second actor, and the at least one second task is linkable to the first task.

## Description

### Field of the invention

The invention is about a system for task management.

The invention is further about a method for task management.

### Background

From the European patent application 01204326.1, not published prior to filing of this patent application, a task management system is known that provides for task entry via a customer user interface and task reservation via an worker interface. According to this application, it is possible for a customer to create a task and make known his specific requirements.
An worker can, using the worker interface, reserve a task, which fits his profile in skill and / or geographical perspective. The worker can book the reserved task in his own schedule, if necessary after confirming with the customer.
The main advantage of such a system is that a worker has control over his own workload. Such a task management system treats tasks as single items. Very often tasks can be subdivided into subtasks. The subtasks need to be completed by various workers. The functionality of the system according to the European patent application 01204326.1 needs to be extended to creation and reservation of subtasks. In this context, customers and workers were until now supposed to be human actors who are able to create and reserve tasks and subtasks. However, also non-human actors should be able to create and reserve tasks and subtasks, and to complete them.

### Summary of the invention

It is an object of the invention to provide a task management system which allows a task creator to create a task, whereby the task can be allocated by a first task executor and linked to at least one subtask, whereby the at least one subtask can be allocated by a second task executor.

The object of the invention is achieved by a task management system according to the invention, comprising a computer environment, a plurality of tasks, whereby the tasks are objects embedded in the computer environment, a task manager comprising a process which is executable in the computer environment, whereby the task manager may be arranged for creating a first task by a first actor, whereby an actor may be a user of the task management system, whereby the task manager can be further arranged for selecting the first task by a second actor, and wherein the task manager may be further arranged for creating at least one second task by the second actor, and the at least one second task may be linkable to the first task.

The task management system according to the invention has the surprising effect that out of a first task, created by a task creator, a plurality of dependant tasks can grow created by an actor or a group of actors as needed and whereby all task depend upon the first task.

An embodiment according to the invention, wherein the at least one second task is linkable to at least one further task, has the advantage that a sequential interdependency can be created of a task with a plurality of other tasks. This sequential interdependency can be used to organise tasks for completion. Each new task linked to pre-existing tasks can be completed in the order in which they are placed, so a new task linked to other tasks can be completed after the other tasks are completed.
Tasks can be organised according this strategy even when they belong to different task trees.

A further embodiment of the invention, wherein a task is markable according to a completion state of the task, has the advantage that an actor can manage the tasks allocated to him and for example deselect or remove a completed task.

A further embodiment of the invention, wherein the task manager is arranged such that the first task is markable "completed" only if the at least one second task is marked "completed", has the advantage that a task created by a customer can only be marked "completed" if all tasks in a tree are "completed". This allows an actor to manage a whole task tree.

A further embodiment of the invention, wherein the task manager is arranged to generate a signal if one of the at least one second task is referenced to by the task manager and at least one of the further tasks it is linked to is not marked "completed", has the advantage that an actor can be notified of a situation where the order of completion of tasks may be hampered, whereas the actor still has the freedom to manipulate tasks at will.

A further embodiment of the invention, wherein the task manager is arranged such that one of the at least one second task is modifiable only if all of the tasks it is linked to are marked "completed", has the advantage that an actor may be prevented from unwillingly modifying a task.

A further embodiment of the invention, wherein the task manager is arranged such that one of the at least one second task is markable "completed" only if all of the tasks it is linked to are marked "completed", has the advantage of preventing marking a task unwillingly or untimely "completed", whereby untimely means out of the order in which the tasks were placed.

A further embodiment of the invention, the task manager is arranged to detect a change in a task , the system further comprising a trigger manager, whereby the task manager is arranged to notify the trigger manager of the change in the task, and the trigger manager is arranged for generating a trigger signal to an actor, has the advantage that an actor allocated to the task can monitor the development of the task.

A further embodiment of the invention, wherein the trigger manager is arranged to subscribe an actor to a trigger and whereby the trigger manager is arranged to generate the trigger signal associated with the subscribed actor, whereby an actor is a subscribed user of the task management system, has the advantage that other actors than the actors allocated to a task can monitor the development of the task.

The problem is also resolved in another embodiment of the invention, in a method for managing tasks comprising
- creating a first task by a first actor using a task management system according to any of the preceding claims,
- selecting and allocating the first task to a second actor,
- creating a second task by the second actor,
- linking the second task with the first task.
The advantage of this method is that out of a single task, created by a customer, a task tree can be created by an actor or a group of actors as needed.

A further embodiment of the invention comprising linking the second task to further tasks, has the advantage that a sequential interdependency can be created of a task with a plurality of other tasks. This sequential interdependency can be used to organise tasks for completion. Each new task linked to pre-existing tasks can be completed in the order in which they are placed, so a new task linked to other tasks can be completed after the other tasks are completed.
Tasks can be organised according this strategy even when they belong to different task trees.

A further embodiment of the invention comprising marking a status field with the completion state of a task, has the advantage that an actor can manage the tasks allocated to him and for example deselect or remove a completed task.

A further embodiment of the invention comprising marking the status field of the first task "completed" only if the at least one second task is marked "completed", has the advantage that a task created by a customer can only be marked "completed" if all tasks in a tree are "completed". This allows an actor to manage a whole task tree.

A further embodiment of the invention comprising referencing the second task and generating a signal by the task manager, if one of the first task and the further tasks is not marked "completed", has the advantage that an actor can be notified of a situation where the order of completion of tasks may be hampered, whereas the actor still has the freedom to manipulate tasks at will.

A further embodiment of the invention comprising releasing the second task for modification, only if the first task and the further tasks are marked "completed", has the advantage that an actor may be prevented from unwillingly modifying a task.

A further embodiment of the invention comprising marking the status field of the second task "completed" , only if the first task and the further tasks are marked "completed", has the advantage of preventing marking a task unwillingly or untimely "completed", whereby untimely means out of the order in which the tasks were placed.

A further embodiment of the invention comprising detecting a change in a task by the task manager (2) and subsequently generating a trigger signal, is advantageous since it provides the possibility of monitoring the development of the task tree.

A further embodiment of the invention comprising subscribing an actor to a trigger by a trigger manager (3) and whereby the trigger manager (3) is arranged to generate the trigger signal associated with the subscribed actor, has the advantage that other actors than the actors allocated to a task can monitor the development of the task.

### Brief description of the drawings

The invention will be further explained with reference to the drawings, in which:
Fig. 1 shows a task management system according to a preferred embodiment of the invention.
Fig. 2 shows a list of tasks having a tree-like interdependency according to an embodiment of the invention.
Fig. 3 shows a list of tasks having a sequential interdependency according to an embodiment of the invention.
Fig. 4 shows an example of a use of the task management system according to the invention.

### Detailed description

A task management system according to an embodiment of the invention comprises a computing environment, whereby the computing environment may comprise a computer having a processor, a memory, a mass storage, an input device and a display. The computing environment may also comprise a plurality of computers, communicating via a network, whereby at least on of the computers is arranged as a server and at least one other computer is arranged as a terminal or workstation.

The task management system further comprises a tasks installed or embedded in the computer environment.

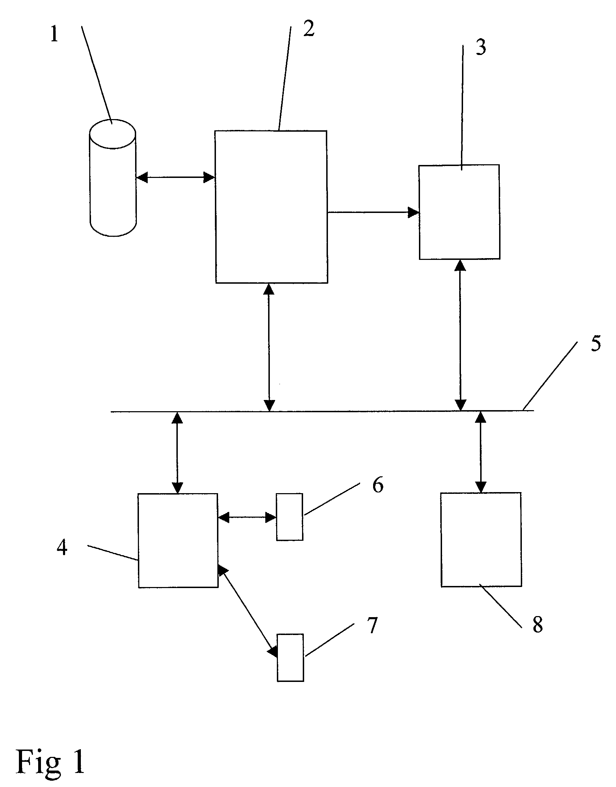

In fig. 1 the task management system according to a preferred embodiment of the invention further comprises a task database 1 installed on the computer with task records for the various tasks, the task records are further in this document referred to as tasks.

In an alternative embodiment the tasks may be objects in an object oriented programming environment. In yet a further alternative embodiment of the invention, tasks may be elements in an array stored in the computer environment.

The task management system according to the invention interacts with different actors. Such an actor is present in the task management system as a user having at least one role or having at least one authorisation for creation, allocation and completion of a task.
A task needs a an actor as a task creator, responsible for creating the task, an actor as a task allocator for selecting and allocating a task to another actor, and an actor as a task executor, responsible for completion of the task. It is possible to make a task allocatable to more than one actor for various purposes.
The task allocator may be a worker who can select a task according to required skills necessary for completing the task and / or a geographical location where the worker is active or where the task is to be completed and allocate the task to himself for completion.

A task may be non-allocatable if an actor is not required for completion.
A task allocator can also be a manager who selects a task and allocates it to a worker in his department for completion.

An actor may also be non-human. In this case the actor comprises a process 8 active in the computer environment. This process may be part of a further task management system or a logistic system or any other system that is arranged to control tasks in a task management system according to the invention.

A task may comprise fields indicating
- task type, whereby a choice may be made between a plurality of predefined task types,
- a task executor,
- a task creator,
- task location where the task is to be performed , e.g. "client address",
- task execution date on which the task should be completed.
- task status; "status" can be possible value in a status diagram. Changes in status values can conform to possible status transitions,
- at least one reference to another task, in order to enable creation of interdependent tasks.

The task management system according to the preferred embodiment of the invention further comprises a task manager 2 for creating and modifying tasks. The task manager 2 comprises queries and programming code for executing the functions for which the task manager 2 has been arranged. An actor allocated to a task can modify the task using the task manager 2.

The task manager 2 may be accessible for an actor via an Application Programming interface 5 (API). Via this API 5 commands can be sent to the task manager 2, which responds to the actor also via the API 5.
If an actor in the form of a process 8 is present, it will communicate via the API 5 with the task manager 2 directly.

A human actor may use a task access manager 4 for providing user interfaces enabling the actor to access, display, modify and manipulate tasks in the tasks 1, whereby the task access manager communicates via the API 5 with the task manager.

Such user interfaces may be graphical where tasks may be graphically represented on a display and where an actor can control the task via input devices like keyboards and pointing devices like a computer mouse.

The task access manager 4 may be arranged to provide for a task creator's interface 6 at the display, thereby showing a task creator visual elements, e.g. a database form or page where the task creator can submit task information via the input device to the task management system to create a task. The task access manager 4 enables an actor with a task creator's role or task creation authorisation to access the task manager 2 to create a task.
An example of such an actor can be a customer who wants to place an order into the task management system. The customer logs on to the task management system, whereby the task manager 2 recognises the customer according to an actor table. The task manager 2 can than authorise the customer to perform actions on a task allocated to the customer.

The task access manager 4 can be further arranged to provide for a task executor's interface 7 at the display, thereby showing a task executor visual elements of a first task, e.g. a database form or page whereby the task executor can submit task information via the input device to the task management system to allocate and supplement a task.

The task manager 2 and the task access manager 4 can be built using a database management environment such as Oracle, Sybase, etc well known for a person skilled in the art, wherein an application can be built providing the functionality of the task management system and task access manager 4 according to the invention.
An application server can also be used in cooperation with the database for providing access and all functionality needed for the task management system.

When the task manager 2 has created a first task on the command of an actor with ask creators authorisation, the task manager 2 can be arranged to provide a way for an actor with task allocator authorisation to create a second task dependent on the first task. In this case the second task is linked to the first task by placing a reference to the first task in a first reference field of the second task. A further task may also be created by a further task allocator, whereby the further task may reference the second task and so on.
Tasks created in this way form a task tree 9, starting from a first task 10 created by the task creator, which has no reference to another task. This task 10 can be referred to as a root task. A dependent task can be referred to as a subtask 11.

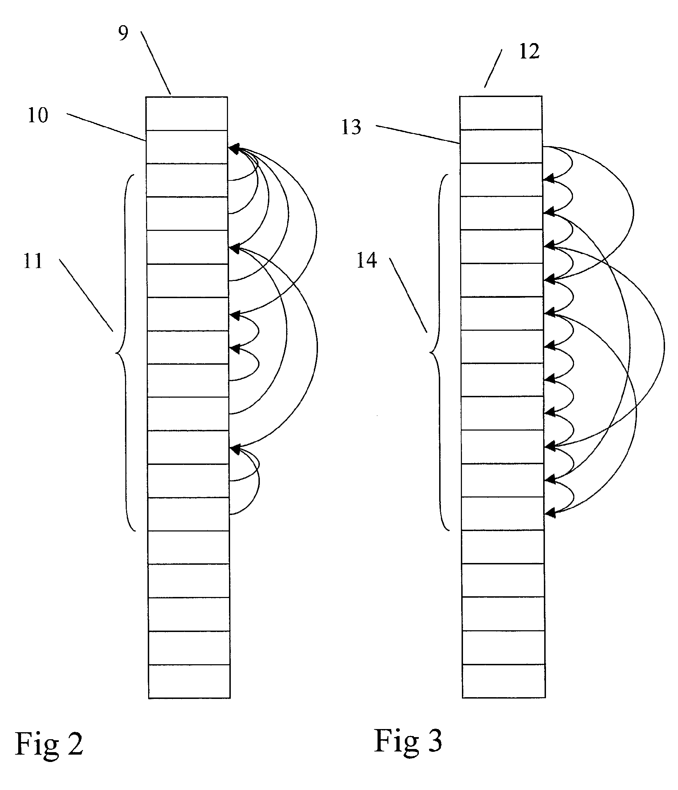

Fig. 2 shows the interdependency of a root task 10 and subtasks 11.

In the preferred embodiment according to the invention where a task database is used, a reference to another task can be made using a field in a task wherein for example a numerical reference to the other task can be written. The task table in which the tasks are arranged has a 1:n or one-to-many relationship with itself.

The task access manager 4 can be arranged to provide task tree structures in "views". Such a view shows a specific selection of tasks from a task tree that is relevant for the actor concerned and for which the actor is authorised. This view can be created by means of a database query programmed in the task manager 2 and executed in the task database 1.
In the case of human actors, a visual interface would be natural; in the case of non-human actors, a software interface would be an obvious choice.

According to a further embodiment of the invention a task may be linked to a plurality of tasks. When a first task has been selected and allocated, the task allocator can, using the task manager 2, create a second task linked to the first task and also a further link to a further task already in the system
In this way a sequentially interdependent task chain 12 is created.
A possible purpose to link tasks in this way may be a common property of the linked tasks like order of completion, but other purposes may apply.
The linking of the second task to a plurality of pre-existing tasks, the first task and possible further tasks, can be achieved by providing a plurality of references associated with the second task and the further tasks. These references may for example comprise a linked list of references.
In the preferred embodiment of the invention, where a task database is used, a so-called n:m or many-to-many relationship may be used with the task table, whereby a complementary table is used having records with two fields, a first field in a first record having a reference to the second task and a second field having a reference to the first task and a first field of a second record to the second task and a second field having a reference to a further task.
Fig. 3 shows a chain of sequentially interdependent tasks according to this embodiment of the invention.

According to an embodiment of the invention, a task can have a status. In the preferred embodiment according to the invention, where a database is used, this status is embodied in a status field having a value corresponding to a particular status.

The status of a task can be, but not limited to, one of the following: "in task tray" and "allocated" and "completed".
A task can have the status "in task tray" when that task has not been allocated to an actor yet. A task is "allocated" when that task has been allocated to an actor.
The status values "in task tray" and "allocated" are equivalent to a status "non-completed".
A task is "completed" when the actor, a task executor to which or to whom the task has been allocated marks the task as "completed". An allocatable task is not "completed" when no actor has been allocated to that task yet, or when the allocated actor does not yet guarantee the completion of the task.

The tree-like dependency and the task status can be used according to the invention for administration of completion of the tasks.
The task manager 2, according to the invention, can be arranged such that if a first task is selected for marking "completed", all tasks that reference the first task are selected, for example by a query. If one of the selected tasks is not marked "completed", the task manager can be arranged that the actor who wants to mark the first task as completed of the fact that the interdependent tasks are not marked completed.
It is also possible to arrange or program the task manager 2 to block the first task for marking "completed".
A root task according to this paradigm can only be marked "completed" if the whole tree, that is all subtasks are marked "completed".
This way a job that has been entered into the task management system can be monitored for completion.

The use of a plurality of dependencies can be used for the coordination of completion of tasks belonging to different trees.
A task may belong to a tree using a single reference to another task.
Using a separate or independent set of a plurality of references, a first task of a first tree, can be linked to tasks from the first tree or tasks from at least one other tree.
If an actor wants perform certain actions on a task, e.g. to modify or mark completed a task, having this multiple dependency to other tasks who are not completed, the task manager 2 can be arranged or programmed to notify the actor of this situation. The task manager 2 may further be arranged to block the actions the actor wants to perform on the first task.

In an embodiment of the invention, the task management system further comprises a trigger manager 3.

An actor may be notified of changes in the task by means of a "trigger". The task manager 2 is arranged to monitor changes in a task. The task manager 2 notifies the trigger manager 3 of a change in a task and what type of change has taken place.
The conditions under which a trigger with a certain type is produced may relate to the situation before the change, as well as to the situation after the change. An example of a trigger condition is a change of task status to "allocated". Another example of a trigger condition is a change of task status from "in task tray" to "allocated ".
The trigger manager 3 is arranged to send a trigger to an actor using the API 5. The trigger manager 3 is can be arranged to determine the conditions under which a trigger is sent.

The trigger manager 3 is further arranged to enable an actor to be subscribed to a plurality of tasks and to a plurality of trigger types. If a trigger of the type to which an actor is subscribed occurs in one of the tasks to which the actor is subscribed, than the actor is notified.
For human actors, a trigger may for example take the form of an SMS or e-mail message; for non-human actors, the call of a system procedure of the actor would be appropriate.
The trigger manager 3 can be arranged in such a way that a trigger is sent to a subscribed actor only after the same trigger condition has occurred a predetermined number of times, whereby the predetermined number is at least one.
The trigger manager 3 may also send multiple triggers to various actors. These multiple triggers may be sent to the actors in a certain sequence. For example, the trigger resulting from a change in a task can be sent to a first actor before the trigger resulting from that same change is sent to a second actor.
The trigger manager 3 can be a process in the computer environment just as the task manager 2 and be programmed to perform the functions as described.

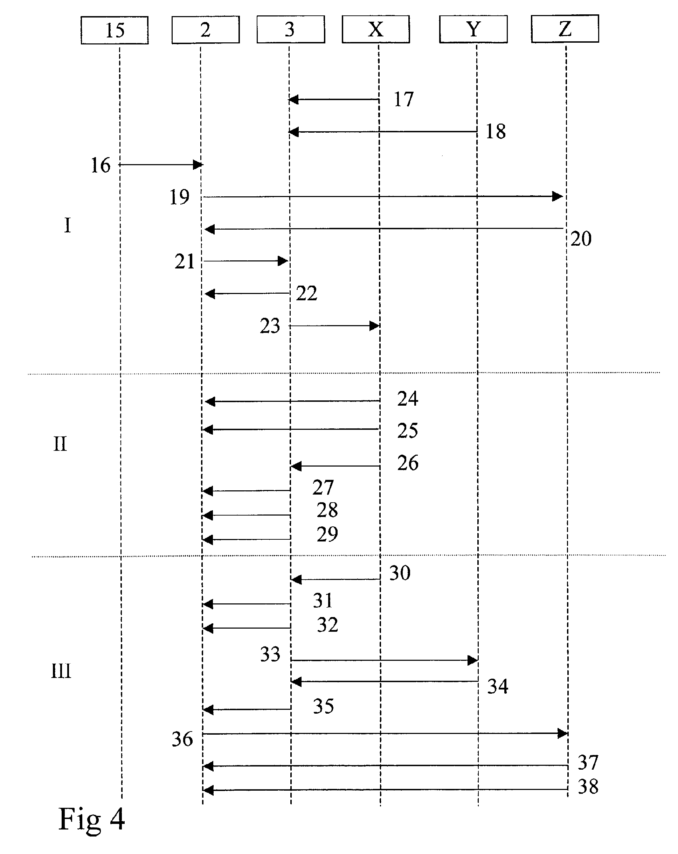

An example of the use of a task management system according to the invention is shown in fig 4 and described below:
A telecommunications company may sell PSTN telephony subscriptions to customers.
   When a customer 15 wants a subscription a task can be entered in the task management system16 for realising the customer request (based on e.g. the customer entering the order on the internet site of the company or by a call-centre worker). This task, named "PSTN order", is entered 16 in the task management system as a non-allocatable task, i.e. the task can only be completed by actors by completing the allocatable dependent tasks or subtasks. The task "PSTN order" can subsequently be broken down into several subtasks 19, 20, based on information on the current state of the PSTN network, that must be performed in order to complete the main task. The breaking down into subrasks 19, 20 can be performed by an actor, for example Z, who has selected, and reserved 19 the task by allocating it to himself . The task **"PSTN order",** can be broken down into the non-allocatable tasks by creating 20 the tasks **work at customer's location"** and **"work in the network"** and the allocatable task "**switch**" having the task type "switching". The task **"work at customer's location** can further be decomposed into the allocatable tasks **"main distributor"** and **"cable distributor".** The task **"work in the network"** can be decomposed into the allocatable tasks **standard peripherals** and **infrastructure standard peripherals".**

Processes X and Y can be processes that perform automated switching. These processes can be known in the task management system as actors. These processes will perform most switching jobs. Human actors must complete switching jobs that cannot be completed automatically by these processes.

Trigger manager 3 can be arranged to subscribe processes X and Y 17, 18, to triggers of tasks of the type "switching" that receive the status "in task tray". The trigger manager 3 can further be arranged so that a trigger can be marked to be sent to process X first and to process Y secondly. Furthermore the condition of the trigger can be marked to be evaluated repeatedly before being sent to each process.

When the task "switch" is created having task type "switching" (receiving the status "in task tray"), the task manager detects the change, notifies 21 the trigger manager 3 which starts a transaction by sending a trigger 23 to process X.

The task can be locked 22 by the task manager 2 for changes by actors other than process X. Now, process X may decide to
- reserve the task 24 (see figure 4 section II), thereby changing the status of the task to "allocated" and possibly changing some other fields of the task 25. Subsequently process X ends 26 the transaction, upon which the trigger manager 3 removes access to the task for actor X 27 and requests the task status again 28 and evaluates the condition of the trigger. Since the status of the task no longer is "in task tray", the task can be unlocked for access for other actors 29.
- not to reserve the task (see figure 4 section III) because it may not be able to perform the switching automatically. Process X ends 30 the transaction upon which the trigger manager 3 removes access to the task for actor X 31 and requests the task status again 32 and evaluates the condition of the trigger.
   Since the condition is still valid, a trigger is sent to process Y 33 whereby a new transaction is started. Process Y decides not to reserve the task and ends the transaction 34. No more triggers are sent because no more actors are subscribed to the trigger.
   The trigger manager now unlocks the task for access for other actors 35.
   A human actor Z may now request a list of switching tasks with the status "in task tray" through a view 36. The human actor may decide to reserve the task and thereby change the status of the task to "allocated" 37. After some time the actor to which the task is allocated may mark the task as "completed" 38.

A similar procedure will be followed for the allocatable tasks **"main distributor", "cable distributor", "standard peripherals"** and **"infrastructure standard peripherals".**
The tasks **"standard peripherals"** and **"infrastructure standard peripherals"** can be stored sequentially interdependent on each other, since work at the customer's location is best performed by one actor during the same timeslot. Furthermore the task "work at customer's location" can be made sequentially interdependent on the task "work in the network" since work at the customer location requires that the network connection is available. This means the actors that reserved subtasks of "work at customer's location" (the task itself is non-allocatable) are given an indication whether the task "work in the network" is completed or not. The actor can be advised by the task manager 2 not to perform and complete those subtasks as long as the task "work in the network" is not completed, but the actor may decide to ignore this advice based on information available to him through e.g. the task management system or other ways like contact with the customer.

When the tasks **"main distributor"** and **"cable distributor"** are marked as completed the non-allocatable task "work in the network" will automatically be marked as completed. When the tasks **"standard peripherals"** and **"infrastructure standard peripherals"** are marked as completed the non-allocatable task **"work at customer's location"** will automatically be marked as completed. When the tasks **"work in the network"** and **"work at customer's location"** are marked as completed the non-allocatable task **"PSTN order"** will automatically be marked as completed.
This example is meant to be strictly exemplary and not limiting for the invention.

## Claims

1. A task management system, comprising
• a computer environment,
• a plurality of tasks (1), whereby the tasks are objects embedded in the computer environment,
• a task manager (2), comprising a process which is executable in the computer environment,
• whereby the task manager (2) is arranged for creating a first task by a first actor, whereby an actor is a user of the task management system,
• whereby the task manager (2) is further arranged for selecting the first task by a second actor,
and wherein
• the task manager (2) is further arranged for creating at least one second task by the second actor, and
• the at least one second task is linkable to the first task,

2. The system according to claim 1, comprising
• the at least one second task is linkable to the first task by having a first reference to the first task.

3. The system according to claim 1 or 2, comprising
• the at least one second task is linkable to at least one further task.

4. The system according to claim 3, comprising
• the at least one second task is linkable to the at least one further task by having at least one second reference to the at least one further task.

5. The system according to any of the claims 1 - 4, wherein
• a task is markable according to a completion state of the task.

6. The system according to the claims 1 and 5, or 2 and 5, wherein
• the task manager (2) is arranged such that the first task is markable "completed" only if the at least one second task is marked "completed".

7. The system according to claim 3 and 5, or 4 and 5, wherein
• the task manager (2) is arranged to generate a signal if one of the at least one second task is referenced to by the task manager (2) and at least one of the further tasks it is linked to is not marked "completed".

8. The system according to claim 3 or 4 and 5, wherein
• the task manager (2) is arranged such that one of the at least one second task is modifiable only if all of the tasks it is linked to are marked "completed".

9. The system according to claim 3 or 4 and 5, wherein
• the task manager (2) is arranged such that one of the at least one second task is markable "completed" only if all of the tasks it is linked to are marked "completed".

10. The system according to any one of the preceding claims , wherein
• the task manager (2) is arranged to detect a change in a task ,
• the system further comprising a trigger manager (3), whereby the task manager is arranged to notify the trigger manager (3) of the change in the task, and
• the trigger manager (3) is arranged for generating a trigger signal to an actor.

11. The system according to claim 10 , wherein
• the trigger signal comprises a message on a user interface or an electronically transmittable message like an e-mail message or SMS message.

12. The system according to claim 10 or 11, whereby
• the trigger manager (3) is arranged to subscribe an actor to a trigger and whereby the trigger manager (3) is arranged to generate the trigger signal associated with the subscribed actor, whereby an actor is a subscribed user of the task management system.

13. A method for managing tasks comprising
• creating a first task by a first actor using a task management system according to any of the preceding claims,
• selecting and allocating the first task to a second actor,
• creating a second task by the second actor,
• linking the second task with the first task.

14. The method of claim 13 wherein
• linking the second task to further tasks.

15. The method of any one of the claims 13 - 14 comprising
• marking a status field with the completion state of a task.

16. The method of claim 15 comprising ,
• marking the status field of the first task "completed" only if the at least one second task is marked "completed".

17. The method of claim 16, comprising
• referencing the second task
• generating a signal by the task manager (2), if one of the first task and the further tasks is not marked "completed".

18. The method of claim 16 or 17 comprising
• releasing the second task for modification, only if the first task and the further tasks are marked "completed".

19. The method of claim 16 or 17 comprising
• marking the status field of the second task "completed" , only if the first task and the further tasks are marked "completed".

20. The method of any of the preceding claims 13 - 19, comprising
• detecting a change in a task by the task manager (2)
• and subsequently generating a trigger signal.

21. The method of claim 20 comprising
• subscribing an actor to a trigger by a trigger manager (3) and whereby the trigger manager (3) is arranged to generate the trigger signal associated with the subscribed actor.
